**Europäisches Patentamt**

**European Patent Office**

**Office européen des brevets**

(19)

(11) Numéro de publication : **0 327 441 B1**

(12)

# FASCICULE DE BREVET EUROPEEN

(45) Date de publication du fascicule du brevet :
06.05.92 Bulletin 92/19

(51) Int. Cl.⁵ : **F28F 9/06, F16L 37/14**

(21) Numéro de dépôt : **89400260.9**

(22) Date de dépôt : **31.01.89**

(54) **Echangeur de chaleur.**

(30) Priorité : **02.02.88 FR 8801187**

(43) Date de publication de la demande :
**09.08.89 Bulletin 89/32**

(45) Mention de la délivrance du brevet :
**06.05.92 Bulletin 92/19**

(84) Etats contractants désignés :
**BE DE ES GB IT LU NL SE**

(56) Documents cités :
**DE-U- 8 624 767**
**FR-A- 2 582 076**
**US-A- 3 698 747**

(73) Titulaire : **HUTCHINSON**
**2 rue Balzac**
**F-75008 Paris (FR)**

(72) Inventeur : **Briet, Gilles**
**Le Petit Vallot Neuvy Grandchamp**
**F-71130 Gueugnon (FR)**

(74) Mandataire : **Ores, Irène et al**
**CABINET ORES 6, Avenue de Messine**
**F-75008 Paris (FR)**

## Description

La présente invention, à laquelle a participé la Société VALEO, est relative à un échangeur de chaleur comprenant un dispositif d'assemblage entre une tubulure d'une boîte à eau de l'échangeur et un raccord tubulaire, dans lequel le raccord tubulaire est fixé par une liaison élastique facilement démontable, selon le préambule de la revendication 1.

Un tel échangeur est connu selon FR-A-2 582 076.

Il s'agit d'un tuyau souple, du type dit durit, à savoir à base d'élastomère, dont l'extrémité enfichable, pourvue d'un bourrelet formé par refoulement de matière, se glisse dans une tubulure d'une boîte à eau d'échangeur de chauffage jusqu'à ce que le bourrelet vienne en butée contre un épaulement annulaire interne de la tubulure. L'étanchéité est obtenue à l'aide d'une bague élastomère qui est comprimée radialement entre la tubulure et le raccord. Le verrouillage du tuyau souple dans la position d'assemblage est obtenu à l'aide d'un clip en U dont les branches sont introduites par des ouvertures de passage ménagées dans la tubulure et s'appliquent contre le bourrelet pour le maintenir comprimé contre la bague d'étanchéité. Les ouvertures de passage de ces branches sont réalisées sous forme de fentes dont la largeur est égale à l'écartement des branches.

Toutefois, à cause de la souplesse du tuyau enfiché dans la tubulure de la boîte à eau et des risques toujours possibles d'affaissement de la paroi du tuyau, cette solution n'offre pas la sécurité d'emploi requise, notamment en termes d'étanchéité.

De plus, il est nécessaire d'utiliser une entretoise de renforcement pour bloquer en position le clip en U.

On connaît également le Modèle d'Utilité allemand DE-U-8 624 767 qui décrit un dispositif d'assemblage du type évoqué plus haut comprenant un clip en U, dans lequel le verrouillage est amélioré à l'aide d'un épaulement de verrouillage réalisé d'un seul tenant avec une des pièces à assembler, cet épaulement maintenant le clip en position et présentant une surface d'approche tronconique aux branches du clip, ce qui permet l'écartement de ces branches lors du montage.

Toutefois, ce document -comme d'ailleurs la solution objet de la Demande de Brevet français FR-A-2 582 076- ne fournit aucune solution pour le démontage de l'assemblage qui soit satisfaisante du point de vue de la rapidité.

La présente invention s'est donné pour but de pourvoir à un dispositif d'assemblage du type susdit qui répond mieux aux nécessités de la pratique que les dispositifs visant au même but antérieurement connus, notamment en ce qu'aucun risque de fuite n'existe au niveau de l'assemblage entre tuyau souple et tubulure et en ce que qu'aucune pièce supplémentaire n'est nécessaire pour que le clip en U puisse exercer efficacement sa fonction de verrouillage.

La présente invention a pour objet un échangeur de chaleur comprenant une boîte à eau, équipée d'une tubulure, ainsi qu'un dispositif d'assemblage entre la tubulure de la boîte à eau et un raccord tubulaire, dans lequel le raccord tubulaire est solidarisé, d'une part, à un tuyau souple par une liaison fixe et, d'autre part, à la tubulure de la boîte à eau de l'échangeur par une liaison élastique facilement démontable, constituée par un clip en U, dont les branches sont logées dans des ouvertures de passage ménagées dans le dispositif d'assemblage et se prolongent au niveau de leur croisement en un moyen de préhension, l'étanchéité entre le raccord tubulaire et la tubulure de la boîte à eau étant assurée par une bague élastomère comprimée radialement entre eux, les branches du clip en U étant destinées à être logées dans deux encoches transversales, parallèles entre elles et diamétralement opposées, qui sont ménagées dans la paroi tubulaire de l'un des deux éléments du dispositif d'assemblage, lequel échangeur est caractérisé en ce qu'un épaulement annulaire de verrouillage est ménagé autour de l'autre élément du dispositif d'assemblage, cet épaulement de verrouillage venant en butée contre les branches du clip et présentant une surface d'approche à ces branches tronconique, et en ce qu'un moyen de déverrouillage des branches du clip est porté par ledit autre élément, ce moyen étant actionné par une légère rotation autour de son axe et étant constitué, pour chaque branche du clip, par deux nervures axiales et excentriques offrant à la branche correspondante, en position d'assemblage, des surfaces d'appui alignées avec les surfaces d'appui des encoches, lesquelles nervures sont disposées de part et d'autre d'un plan axial passant par le point milieu des encoches, le déverrouillage du raccord étant obtenu par rotation dans un sens tendant à centrer l'une ou l'autre des nervures par rapport audit plan axial.

L'invention sera mieux comprise à l'aide du complément de description qui va suivre, qui se réfère aux dessins annexés, dans lesquels :

– la figure 1 est une vue de dessus avec demi-coupe partielle d'une boîte à eau d'échangeur de chaleur assemblée avec un raccord tubulaire,

– la figure 2 est une demi-coupe, suivant II, du dispositif d'assemblage illustré à la figure 1,

– la figure 3 est une vue en élévation latérale du seul raccord tubulaire utilisé dans les assemblages des figures 1 et 2,

– la figure 4 est une vue en coupe du dispositif d'indexage.

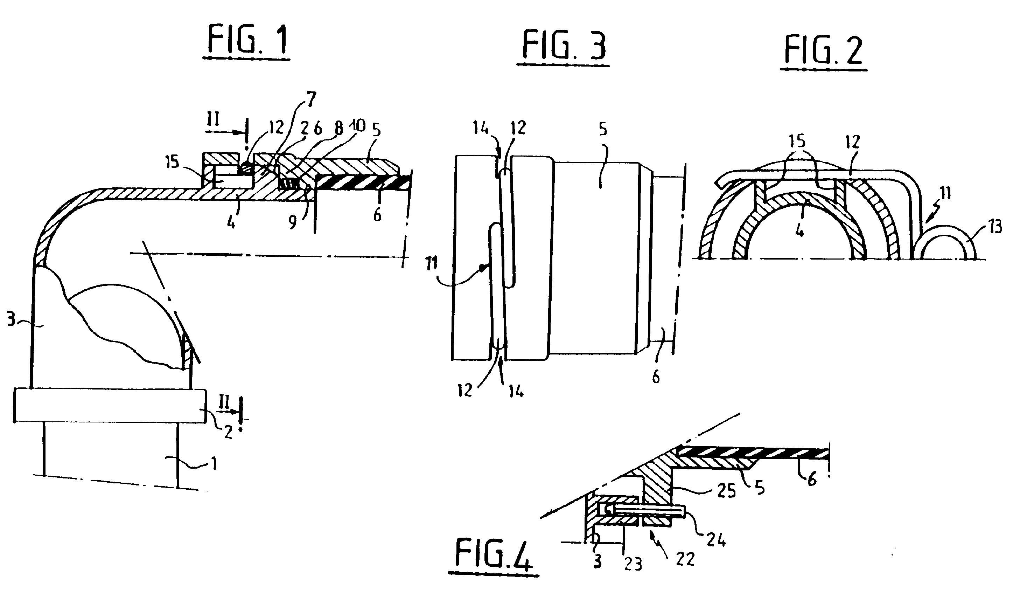

A la figure 1, la référence numérique 1 représente schématiquememement le faisceau d'un échangeur de chaleur, tandis que la référence 2 est un collecteur reliant les tubes précités à la boîte à eau 3 de l'échangeur.

Cette boîte comporte une tubulure 4 faisant saillie de celle-ci et assemblée avec un raccord tubulaire 5 fixé à un tuyau souple 6, du type connu sous la dénomination durit,qui est réalisé à base d'élastomère.

L'extrémité de la tubulure 4 est pourvue d'un épaulement annulaire 7, saillant vers l'extérieur, qui est en retrait par rapport à l'ouverture de la tubulure et qui vient en butée contre un épaulement annulaire 8, saillant vers l'intérieur, du raccord tubulaire 5, lorsque celui-ci est assemblé avec la tubulure.

Dans l'épaulement 8 est ménagé un épaulement secondaire 9 de manière qu'une bague élastomère d'étanchéité 10 soit comprimée radialement entre le raccord et la tubulure, après l'avoir disposée autour de celle-ci.

Le verrouillage de l'assemblage ainsi effectué entre la tubulure 4 et le raccord tubulaire 5 est assuré par un clip en U, 11, pourvu de deux branches sensiblement parallèles 12 qui se prolongent au niveau de leur croisement dans une boucle de préhension 13.

Les branches 12 du clip 11 sont logées (cf. aussi les figures 2 et 3) dans deux encoches transversales 14 parallèles entre elles et diamétralement opposées, qui sont ménagées dans la paroi tubulaire de l'extrémité du raccord tubulaire 5 (qui s'applique sur l'épaulement 7 de la tubulure 4), en une position telle que l'épaulement 7 de cette tubulure est emprisonné entre l'épaulement 8 du raccord et les branches 12 du clip. Cela revient à dire que la distance entre les surfaces internes de ces branches, en position de verrouillage, est inférieure à l'encombrement radial de l'épaulement 7. Cet épaulement présente une surface d'approche oblique (tronconique) 26 pour permettre l'écartement des branches du clip lors du montage, à savoir de l'encliquetage, contre celles-ci, de l'épaulement 7.

La figure 2 montre en demi-coupe un moyen d'écartement radial des branches du clip, où on peut remarquer, sous la branche supérieure, deux nervures axiales et excentriques 15 (cf. aussi la figure 1), qui font saillie de la surface externe de la tubulure 4 et qui sont alignées avec les surfaces d'appui des encoches, en sorte que les branches 12 viennent en appui, en position de verrouillage, sur ces nervures qui, du fait de leur position excentrique,assurent l'écartement des branches du clip lorsqu'on tourne légèrement le raccord autour de son axe.

Les deux nervures 15 sont disposées de part et d'autre par rapport à un plan longitudinal passant par le point milieu des encoches.

Le fait de ménager sur la tubulure 4 le moyen d'écartement précité équivaut à équiper le dispositif d'assemblage d'un moyen d'indexage, qu'on peut qualifier d'"interne" parce qu'intégré à l'un des éléments de l'assemblage.

Dans une variante de réalisation (non représenté) le clip de verrouillage en U peut être monté dans deux encoches de la tubulure et l'épaulement annulaire de verrouillage, à surface d'approche tronconique, peut être porté par le raccord débouchant dans la tubulure (alors que dans les figures 1 et 2 c'est la tubulure qui débouche dans le raccord).

L'avantage du mode de réalisation illustré aux figures 1 à 3, où les encoches 14 sont ménagées dans le raccord 5, par rapport à cette variante, consiste en ce que l'assemblage présente un encombrement radial plus faible.

La figure 4 montre un autre moyen d'indexage (ou de guidage) 22 de l'assemblage, qu'on peut qualifier d'"externe" (par rapport à l'indexage "interne" autorisé par les nervures 15 de la figure 2). Ce moyen d'indexage est constitué par la combinaison d'un bossage 23, porté par la boîte à eau 3, et d'un doigt d'indexage 24 traversant un ergot de support 25 porté par le raccord tubulaire 5, lequel doigt 24 est destiné à être logé dans le bossage 23.

Bien qu'on ait représenté la fixation entre le raccord tubulaire en matière plastique et le tuyau souple élastomère comme étant obtenue par adhérisation (surmoulage direct) tu raccord sur le tuyau, il va de soi que la fixation peut être obtenue par emprisonnement de l'extrémité du tuyau entre le raccord et un surmoulage en matière plastique ou par sertissage d'une bague métallique appliquée autour du tuyau ou encore par simple collage ou par tout autre moyen équivalent. En outre, il est évident que le blocage en position du clip 11 peut être obtenu en repliant légèrement les extrémités libres des branches 12 vers l'intérieur.

**Revendications**

1. Echangeur de chaleur comprenant une boîte à eau (3), équipée d'une tubulure (4), ainsi qu'un dispositif d'assemblage entre la tubulure (4) de la boîte à eau (3) et un raccord tubulaire (5), dans lequel le raccord tubulaire (5) est solidarisé, d'une part, à un tuyau souple (6) par une liaison fixe et, d'autre part, à la tubulure (4) de la boîte à eau (3) de l'échangeur par une liaison élastique facilement démontable, constituée par un clip en U (11), dont les branches (12) sont logées dans des ouvertures de passage ménagées dans le dispositif d'assemblage et se prolongent au niveau de leur croisement en un moyen de préhension (13), l'étanchéité entre le raccord tubulaire (5) et la tubulure (4) de la boîte à eau (3) étant assurée par une bague élastomère (10) comprimée radialement entre eux, les branches (12) du clip en U (11) étant destinées à être logées dans des encoches transversales (14) parallèles entre elles et diamétralement opposées, qui sont ménagées dans la paroi tubulaire de l'un des deux éléments du dispositif d'assemblage (5 ou 4), lequel échangeur de chaleur est caractérisé en ce qu'un épaulement annulaire de verrouillage (7,21) est ménagé autour de l'autre élément (4 ou 5, respectivement) du dispositif d'assemblage, cet épaulement de verrouillage venant en butée contre les branches (12) du clip (11) et présentant une surface d'approche à ces branches tronconique (26, 27), et en ce qu'un moyen de déverrouillage des branches du clip est porté par ledit autre élément (4 ou 5), ce moyen étant actionné par une légère rotation du raccord autour de son axe et étant constitué, pour chaque branche (12) du clip (11), par deux nervures axiales et excentriques (15) offrant à la branche correspondante, en position d'assemblage, des surfaces d'appui alignées avec les surfaces d'appui (19) des encoches (14), lesquelles nervures (15) sont disposées de part et d'autre d'un plan axial passant par le point milieu des encoches, le déverrouillage étant obtenu par rotation dans un sens tendant à centrer l'une ou l'autre des nervures (15) par rapport audit plan axial.

2. Echangeur de chaleur selon la revendication 1, caractérisé en ce que le dispositif d'assemblage comporte un moyen d'indexage (22) comprenant un bossage (23), ménagé sur la boîte à eau (3), et un ergot de support (25) ménagé sur l'un des deux éléments du dispositif d'assemblage et traversés par un doigt d'indexage (24) destiné à être logé dans le bossage (23).

**Patentansprüche**

1. Wärmetauscher mit einem Wasserbehälter (3), der mit einem Rohransatz (4) ausgestattet ist, sowie mit einer Verbindungsvorrichtung für den Rohransatzes (4) des Wasserbehälters (3) mit einem Rohranschluß (5), wobei der Rohranschluß (5) einerseits über eine feste Verbindung mit einem biegsamen Schlauch (6) verbunden ist und andererseits über eine elastische, einfach lösbare Verbindung mit dem Rohransatz (4) des Wasserbehälters (3) des Wärmetauschers verbunden ist, wobei die elastische, einfach lösbare Verbindung durch eine U-Klemme (11) gebildet ist, deren Klemmenbeine (12) in Durchgangsöffnungen in der Verbindungsvorrichtung angeordnet sind und im Bereich ihrer Kreuzung als ein Greifmittel (13) fortgesetzt sind, wobei die Dichtigkeit zwischen dem Rohranschluß (5) und dem Rohransatz (4) des Wasserbehälters (3) durch einen elastischen Ring (10) gewährleistet wird, der radial zwischen den Klemmenbeinen (12) der U-Klemme (11) zusammengedrückt wird und dazu bestimmt ist, in transversalen Kerben (14) angeordnet zu werden, die zueinander parallel und diametral entgegengesetzt in der Rohrwandung eines der beiden Elemente (5 oder 4) der Verbindungsvorrichtung ausgebildet sind, dadurch gekennzeichnet, daß um das andere Element (entsprechend (4) oder (5)) der Verbindungsvorrichtung ein ringförmiger Verriegelungsvorsprung (7,21) ausgebildet ist, wobei dieser Verriegelungsvorsprung als Anschlag für die Klemmenbeine (12) der Klemme (11) dient und eine sich an diese Klemmenbeine annähernde, kegelstumpfartige Oberfläche (26,27) aufweist, und daß das andere Element (4 oder 5) ein Mittel zur Entriegelung der Klemmenbeine aufweist, wobei dieses Mittel durch eine leichte Drehung des Rohranschlusses um seine Achse betätigt wird, und für jedes Klemmmenbein (12) durch zwei axiale und exzentrische Rippen (15) gebildet wird, die jeweils für das entsprechende Klemmenbein in der Verriegelungsstellung Stoßoberflächen bieten, die mit den Stoßoberflächen (19) der Kerben (14) auf einer Linie liegen, wobei diese Rippen (15) beiderseits einer axialen Ebene angeordnet sind, die durch den Mittelpunkt der Nuten verläuft, wobei die Entriegelung durch Drehung in die Richtung erreicht wird, in der die eine oder die andere Rippe (15), bezüglich der axialen Ebene zentriert wird.

2. Wärmetauscher nach Anspruch 1, dadurch gekennzeichnet, daß die Verbindungsvorrichtung ein Indexierungsmittel (22) aufweist mit einem Vorsprung (23), der auf dem Wasserbehälter (3) angeordnet ist, und mit einer Unterstützungsnocke (25), die auf einem der beiden Elemente der Verbindungsvorrichtung angeordnet ist und von einem Indexierungsstift (24) durchdrungen ist, der dazu bestimmt ist in den Vorsprung (23) eingesetzt zu werden.

**Claims**

1. A heat exchanger comprising a water tank (3) provided with a manifold (4), as well as an assembly device between the manifold (4) of the water tank (3) and a tubular connector (5) in which the tubular connector (5) is rigid on the one hand with a flexible pipe (6) through a fixed union and on the other with the manifold (4) of the water tank (3) of the exchanger through an easily removable resilient connection, constituted by a U-shaped clip (11), of which the arms (12) are accommodated in passages provided in the assembly device and which extend at the level of their intersection into a gripping means (13), sealing-tightness between the tubular connection (5) and the manifold (4) of the water tank (3) being provided by an elastomeric ring (10) compressed radially between them, the arms (12) of the U-shaped clip (11) being intended to be seated in transverse notches (14) parallel inter se and diametrically opposed, which are provided in the tubular wall of one of the two elements of the assembly device (5 or 4), the said heat exchanger being characterised in that an annular locking shoulder (7, 21) is provided about the other element (4 or 5) respectively of the assembly device, the said locking shoulder abutting the arms (12) of the clip (11) and offering an approach surface to these frustoconical arms (26, 27) and in that a means of unlocking the arms of the clip is carried by the said other element (4 or 5), the said means being actuated by a slight rotation of the connector about its axis and being constituted for each arm (12) of the clip (11) by two axial and eccentric ribs (15) which, in the position of assembly, offer the corresponding arm bearing surfaces which are aligned with the bearing surfaces (19) of the notches (14), the said ribs (15) being disposed on either side of an axial plane passing through the middle point of the notches, unlocking being obtained by rotation in a direction which tends to centre one or other of the ribs (15) in relation to the said axial plane.

2. A heat exchanger according to Claim 1, characterised in that the assembly device comprises an indexing means (22) comprising a boss (23) disposed on the water tank (3) and a support stud (25) disposed on one of the two elements of the assembly device and traversed by an indexing member (24) intended to be accommodated in the boss (23).

FIG. 1

FIG. 3

FIG. 2

FIG. 4

EP 0 327 441 B1